(19) **Europäisches Patentamt European Patent Office Office européen des brevets**

(11) **EP 3 449 157 B1**

(12) **FASCICULE DE BREVET EUROPEEN**

(45) Date de publication et mention de la délivrance du brevet:
**31.08.2022 Bulletin 2022/35**

(21) Numéro de dépôt: **17725659.1**

(22) Date de dépôt: **21.04.2017**

(51) Classification Internationale des Brevets (IPC):
**F16H 1/32** *(2006.01)* **B62D 5/04** *(2006.01)*

(52) Classification Coopérative des Brevets (CPC):
**F16H 1/32; B62D 5/0421;** F16H 2001/324

(86) Numéro de dépôt international:
**PCT/FR2017/050944**

(87) Numéro de publication internationale:
**WO 2017/187056 (02.11.2017 Gazette 2017/44)**

(54) **RÉDUCTEUR CYCLOÏDAL À DENTURE HÉLICOÏDALE POUR DIRECTION ASSISTÉE**

ZYKLOIDENGETRIEBE MIT SCHRÄGVERZAHNUNG ZUR SERVOLENKUNG

CYCLOIDAL REDUCER WITH HELICAL TOOTHING FOR POWER STEERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2016 FR 1653631**

(43) Date de publication de la demande:
**06.03.2019 Bulletin 2019/10**

(73) Titulaire: **JTEKT Europe**
**69540 Irigny (FR)**

(72) Inventeurs:
• **REY, Laurent**
  **69100 VILLEURBANNE (FR)**
• **SANIEZ, Jean-Michel**
  **59300 AULNOY LEZ VALENCIENNES (FR)**

(74) Mandataire: **Germain Maureau**
  **12, rue Boileau**
  **69006 Lyon (FR)**

(56) Documents cités:
| | |
|---|---|
| EP-A1- 0 286 760 | EP-A1- 0 286 760 |
| EP-A1- 0 931 714 | EP-A1- 2 960 546 |
| EP-A1- 2 960 546 | CN-A- 104 633 062 |
| CN-A- 104 633 062 | FR-A- 1 351 031 |
| FR-A- 1 351 031 | US-A1- 2015 159 734 |

## Description

La présente invention concerne le domaine général des réducteurs à engrenage, et plus particulièrement le domaine des réducteurs à engrenage cycloïdal (dits plus simplement « réducteurs cycloïdaux »), qui assurent une transmission de mouvement entre un arbre d'entrée et un arbre de sortie, afin d'opérer une réduction de la vitesse de rotation au profit d'une augmentation du couple transmis.

L'invention concerne plus spécifiquement l'application de tels réducteurs à un système de direction assistée pour véhicule.

Il est connu de prévoir, au sein d'un système de direction assistée, un réducteur à engrenage qui assure une transmission de mouvement entre un moteur d'assistance, généralement électrique, et un pignon d'entraînement qui vient en prise sur une crémaillère de direction, de manière à pouvoir entraîner ladite crémaillère en translation pour modifier l'angle de braquage des roues directrices du véhicule.

Il est généralement connu d'employer à cet effet un réducteur à roue tangente et vis sans fin.

Ceci étant, il a également été envisagé, notamment par la demande de brevet EP-0 931 714, d'utiliser dans ce même but un réducteur à engrenage cycloïdal, au sein duquel l'arbre d'entrée entraîne, au moyen d'un organe d'excentrique, tel qu'une came, un disque qui est pourvu d'une denture cycloïdale et qui engrène sur une série de dents formées par des pions d'engrènement qui sont implantés en cercle dans une couronne formant une portion d'un carter du réducteur. L'arbre de sortie, coaxial à l'arbre d'entrée, est pourvu d'une série de doigts d'accouplement, engagés chacun dans un orifice circulaire creusé dans le disque, de telle sorte que la mise en rotation du disque sous l'effet combiné de la came et de la denture cycloïdale permet d'entraîner à son tour l'arbre de sortie en rotation.

Cependant, un tel agencement présente certains inconvénients, qui expliquent que les réducteurs à engrenage cycloïdal connus sont en pratique inadaptés, et de fait écartés, dans un certain nombre d'applications, notamment lorsque l'on souhaite concrètement assurer une transmission de puissance et de mouvement au sein d'un système de direction assistée. Autres réducteurs cycloïdales qui représentent l'état de la technique sont connues de EP0286760 A1, CN104633062 A et EP2960546 A1.

En effet, les réducteurs cycloïdaux connus présentent tout d'abord, en raison du grand nombre de pièces qui les constituent, parmi lesquelles notamment les multiples dents individuelles (pions d'engrènement) implantées dans la couronne ainsi que les multiples doigts d'accouplement, une structure très complexe, relativement lourde et encombrante.

Cette multiplicité de pièces constitutives rend en outre lesdits réducteurs cycloïdaux particulièrement longs et coûteux à fabriquer.

Ensuite, les réducteurs à engrenage cycloïdal présentent, par rapport aux réducteurs à engrenage conventionnels, de type réducteurs à roue tangente et vis sans fin, un faible rapport de conduite (« *contact ratio* »), c'est-à-dire un faible nombre moyen de dents qui se trouvent simultanément en prise lors de l'engrènement.

Ce faible rapport de conduite tend à créer certaines irrégularités lors de la transmission de mouvement, irrégularités qui peuvent se traduire par des saccades, des chocs et des bruits de fonctionnement.

De telles irrégularités sont de surcroît susceptibles de perturber le ressenti tactile du conducteur lorsque ce dernier manœuvre le système de direction, ce qui peut être préjudiciable au confort de conduite, voire à la sécurité du véhicule et de ses occupants.

En outre, le rapport de réduction obtenu par le réducteur cycloïdal décrit ci-dessus, c'est-à-dire le rapport entre vitesse d'entrée et vitesse de sortie, est en pratique relativement faible.

Or, les exigences croissantes en matière de légèreté et de compacité qui sont imposées aux systèmes de direction assistée amènent à privilégier des moteurs d'assistance relativement peu puissants, capables certes de produire une vitesse de rotation élevée mais fournissant en revanche peu de couple, et qui doivent donc être secondés par un réducteur présentant un rapport de réduction élevé et un bon rendement mécanique.

Les objets assignés à l'invention visent par conséquent à remédier aux inconvénients susmentionnés et à proposer un nouveau type de réducteur cycloïdal simplifié et compact, qui opère une transmission de mouvement efficace, douce et uniforme, et qui puisse être notamment adapté à l'entraînement d'un mécanisme de direction assistée.

Les objets assignés à l'invention sont atteints au moyen d'un réducteur à engrenage cycloïdal selon la revendication 1 et avec un système de direction assistée qui comprend un tel réducteur selon la revendication 5. Des modes de réalisation préférés sont décrits dans les revendications dépendantes.

Avantageusement, la mise en œuvre d'une denture hélicoïdale, c'est-à-dire inclinée d'un angle d'hélice prédéterminé par rapport à l'axe de rotation du disque concerné (respectivement par rapport à l'axe de la couronne concernée), permet d'obtenir un engrènement plus progressif et plus étendu des dentures cycloïdales, et par conséquent un rapport de conduite d'engrenage plus élevé et une meilleure répartition des efforts.

L'invention permet ainsi d'améliorer la douceur de fonctionnement de l'engrenage cycloïdal, et plus globalement la douceur de fonctionnement du réducteur cycloïdal, par rapport aux réducteurs connus.

On notera à ce titre que, au sein des réducteurs cycloïdaux connus, la fabrication d'une denture à partir de pions individuels d'engrènement rapportés sur la couronne requérait jusqu'à présent l'utilisation de pions cylindriques droits, identiques les uns aux autres, et était par conséquent incompatible avec un façonnage et une implantation desdits pions selon une géométrie hélicoïdale, ce qui imposait donc la mise en œuvre d'une denture droite, qui souffre précisément des défauts détaillés plus haut.

Ici, au contraire, les dentures cycloïdales hélicoïdales du réducteur selon l'invention peuvent être formées d'un seul tenant avec le disque concerné, respectivement avec la couronne concernée, par exemple par moulage et/ou taillage, ce qui améliore la robustesse dudit réducteur et simplifie grandement l'assemblage dudit réducteur.

Par ailleurs, l'emploi de dentures hélicoïdales est parfaitement adapté à la réalisation d'un réducteur comprenant plusieurs étages de réduction cycloïdaux consécutifs, typiquement d'un réducteur à deux étages de réduction, ce qui permet d'obtenir des rapports de réduction très élevés, tout en conservant un encombrement réduit.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

La figure 1 illustre, selon une vue en coupe longitudinale le long de l'axe principal (ZZ'), une variante de réalisation d'un réducteur cycloïdal à deux étages selon l'état de la technique, et une implantation possible dudit réducteur au sein d'un système de direction assistée.

La figure 2 illustre, sous forme d'un schéma cinématique, le réducteur de la figure 1.

La figure 3 illustre, selon une vue en perspective éclatée, le réducteur des figures 1 et 2.

La figure 4 illustre, selon une vue en perspective éclatée, le détail des étages de réduction cycloïdaux du réducteur des figures 1 à 3.

La figure 5 illustre, selon une vue en perspective schématique, le principe de fonctionnement d'un réducteur cycloïdal comprenant un seul étage de réduction.

Les figures 6 et 7 illustrent, les dentures d'un réducteur cycloïdale selon l'invention, utilisable au sein du réducteur des figures 1 à 4.

Les figures 8 et 9 illustrent, selon des vues en projection normale à l'axe principal (ZZ'), le sous-ensemble de réduction des figures 6 et 7 vu respectivement depuis le premier étage de réduction (entrée) et depuis le second étage de réduction (sortie).

La figure 10 illustre une vue de côté du sous-ensemble de réduction, avec arrachement de matière, de la figure 7.

La figure 11 représente une vue de détail en perspective d'une couronne à denture cycloïdale hélicoïdale selon l'invention, utilisée au sein du réducteur des figures 1 à 4 et 6 à 10.

La présente invention concerne un réducteur à engrenage cycloïdal 1, dit aussi « réducteur cycloïdal » 1 (ci-après « réducteur » 1).

Un tel réducteur 1 permet avantageusement une transmission et une conversion de mouvement et/ou d'effort, et donc une transmission et une conversion de puissance mécanique, entre un arbre d'entrée 2, qui reçoit la puissance motrice à transmettre, et un arbre de sortie 3, qui transmet ladite puissance motrice en aval du réducteur 1.

Le terme « réducteur » 1 peut désigner ici indifféremment soit un mécanisme effectivement destiné à opérer une réduction, c'est-à-dire utilisé pour réduire la vitesse et augmenter le couple transmis, le réducteur 1 étant alors agencé selon une configuration dite « configuration directe » de telle sorte que l'arbre de sortie 3 tourne à une vitesse de rotation de sortie $\omega 3$ moindre que la vitesse de rotation d'entrée $\omega 2$ de l'arbre d'entrée 2 mais en développant un couple de sortie T3 supérieur au couple d'entrée T2 exercé sur ledit arbre d'entrée 2, soit un mécanisme multiplicateur, le réducteur 1 étant alors agencé selon une configuration dite « configuration inverse » de telle sorte que l'arbre de sortie 3 tourne plus vite que l'arbre d'entrée 2, mais en développant un couple T3 inférieur à celui T2 fourni à l'arbre d'entrée 2.

De préférence, le réducteur 1 sera un mécanisme réversible, pouvant adopter sélectivement soit la configuration directe, soit la configuration inverse, simplement en permutant les rôles de l'arbre d'entrée 2 et de l'arbre de sortie 3.

Par simple commodité de description, on considérera dans ce qui suit que le réducteur 1 se trouve en configuration directe, et assume une fonction de réduction de vitesse de rotation entre l'arbre d'entrée 2 et l'arbre de sortie 3.

Par ailleurs le réducteur 1 est de préférence à double sens de fonctionnement, en ceci qu'il peut transmettre aussi bien un mouvement de rotation en sens horaire que, au contraire, un mouvement de rotation en sens anti-horaire.

Bien entendu, le réducteur 1 selon l'invention pourra être couplé à tout système mécanique de transmission de mouvement (et d'effort), et plus particulièrement être utilisé en sortie de tout type de machine tournante, telle que moteur, turbine, éolienne ou hydrolienne, ou encore en association avec tout type de mécanisme rotatif, à entraînement motorisé ou bien manuel, du genre pédalier, treuil (notamment treuil à manivelle), mouvement d'horlogerie (remontoir automatique), etc.

Toutefois, selon une variante d'application particulièrement préférentielle, le réducteur 1 selon l'invention sera utilisé au sein d'un système de direction assistée 4, destiné à un véhicule, préférentiellement à un véhicule automobile, et sera de préférence configuré pour assurer une fonction de réduction au sein dudit système de direction assistée 4.

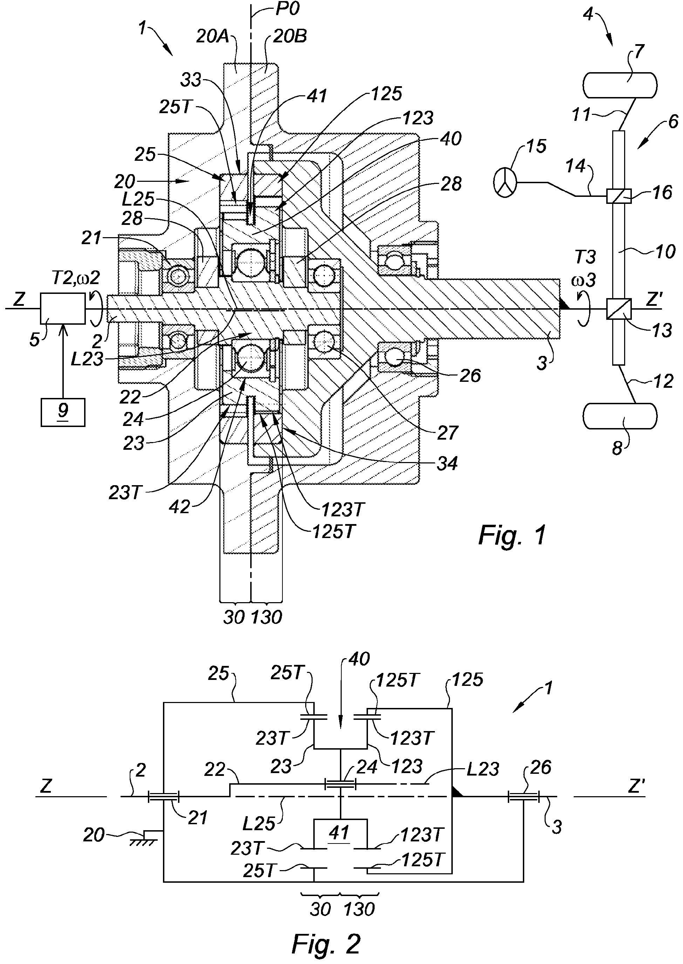

L'invention porte donc en tant que telle, ainsi que cela est illustré sur la figure 1, sur un système de direction assistée 4, qui comprend un moteur d'assistance 5, un mécanisme de direction 6 qui permet de modifier l'angle de braquage d'un ou plusieurs organes directionnels 7, 8, tels qu'une ou plusieurs roues directrices 7, 8, ledit système de direction assistée 4 comportant un réducteur cycloïdal 1 selon la revendication 1 pour assurer une transmission mécanique entre ledit moteur d'assistance 5, ici raccordé à l'arbre d'entrée 2, et le mécanisme de direction 6, ici raccordé à l'arbre de sortie 3.

Le moteur d'assistance 5 est de préférence un moteur électrique à double sens de rotation, qui est piloté électroniquement, en fonction de lois d'assistance prédéterminées, par un calculateur 9 embarqué sur le véhicule.

De façon connue en soi, le mécanisme de direction 6 peut comporter une crémaillère 10, qui est montée en translation dans un carter de direction fixé au châssis du véhicule, et qui est raccordée aux roues directrices 7, 8 par des biellettes de direction 11, 12.

L'arbre de sortie 3 du réducteur 1 peut alors avantageusement être raccordé à un premier pignon d'entraînement 13 qui engrène sur ladite crémaillère 10.

Le mécanisme de direction 6 comprend de préférence également une colonne de direction 14 qui porte un volant de conduite 15 sur lequel le conducteur agit pour choisir l'angle de braquage, et donc le cap du véhicule.

Selon une variante de réalisation préférentielle, le mécanisme de direction 6 est un mécanisme « à double pignon », au sein duquel la colonne de direction 14 engrène sur la crémaillère 10 au moyen d'un second pignon d'entraînement 16, distinct et distant du premier pignon d'entraînement 13, tel que cela est illustré sur la figure 1.

Comme cela est illustré sur la figure 1, le réducteur cycloïdal 1 comprend un arbre d'entrée 2 qui est monté en rotation dans un carter de réducteur 20 selon un axe dit « axe principal » (ZZ').

L'arbre d'entrée 2 est à cet effet porté, et guidé en rotation, par au moins un palier d'entrée 21, tel qu'un roulement à billes, logé dans le carter de réducteur 20.

Le réducteur 1 comprend également un organe d'excentrique 22, tel qu'une came, qui est porté par l'arbre d'entrée 2 et entraîné en rotation par ledit arbre d'entrée 2.

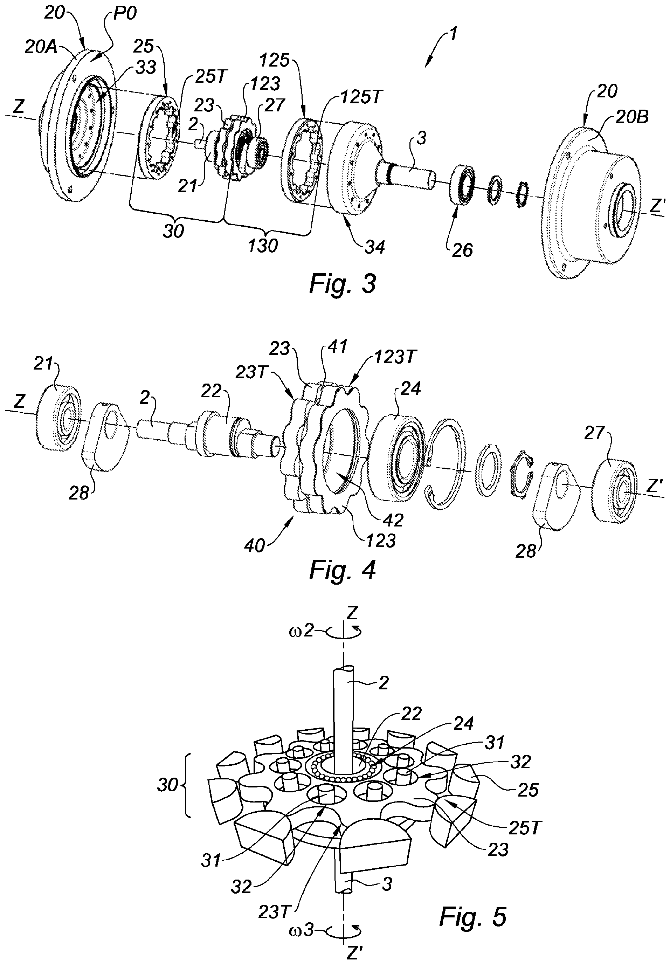

L'organe d'excentrique 22 peut être formé par une pièce séparée, du genre came, qui est rapportée et fixée sur l'arbre d'entrée 2, ou bien, de préférence, et tel que cela est illustré sur les figures 1 et 4, ledit organe d'excentrique 22 peut être formé d'un seul tenant avec l'arbre d'entrée 2.

Le réducteur 1 comprend en outre au moins un disque cycloïdal 23 qui est monté en rotation sur l'organe d'excentrique 22, au moyen d'un palier d'excentrique 24, tel qu'un roulement à billes, ledit disque cycloïdal 23 étant pourvu, ici sur son périmètre radialement externe, d'une denture cycloïdale 23T.

On notera L23 l'axe central dudit disque cycloïdal 23.

Ledit axe central L23 est, de préférence, parallèle à l'axe principal (ZZ').

La denture cycloïdale 23T présente, comme son nom l'indique, sensiblement voire exactement un profil de cycloïde, ladite cycloïde correspondant mathématiquement à la trajectoire suivie par un point fictif situé sur un cercle générateur fictif qui roule sans glisser sur le périmètre radialement externe d'un cercle de base centré sur l'axe central L23, ledit cercle de base correspondant ici au cercle de fond de denture du disque cycloïdal 23.

En l'espèce, les lobes formant la denture 23T du disque 23 font ainsi saillie radialement selon une direction centrifuge par rapport à l'axe central L23 et par rapport au cercle de fond de denture du disque 23.

Le réducteur 1 comprend également au moins une couronne 25 qui est pourvue d'une denture réceptrice 25T sur laquelle engrène la denture cycloïdale 23T du disque cycloïdal 23.

La denture réceptrice 25T est avantageusement également cycloïdale, de forme conjuguée à la denture 23T du disque 23, et possède un même module (d'engrenage) que la denture 23T du disque 23, de sorte à permettre l'engrènement.

Ladite denture réceptrice 25 est générée sur le périmètre radialement interne de la couronne 25, en saillie radiale centripète vers l'axe central L25 de la couronne.

L'axe central L25 de la couronne 25 est de préférence confondu avec l'axe principal (ZZ'), de sorte que la couronne 25 est de préférence coaxiale à l'arbre d'entrée 2.

Bien entendu, les paramètres servant à définir, sous formes de courbes paramétrées, les profils cycloïdaux des dentures 23T, 25T, tels que le diamètre du cercle primitif, l'excentricité, ou le diamètre du cercle de fond de denture de la couronne pourront être ajustés librement de manière à adapter lesdits profils de denture, par rapport à un profil théorique rigoureusement cycloïdal, afin, par exemple, de minimiser les contraintes exercées sur les dents et à optimiser le jeu radial permettant à la fois un assemblage facile de l'engrenage cycloïdal et un engrènement en douceur.

Pour assurer les appuis nécessaires à la transmission de mouvement entre l'arbre d'entrée 2 et le disque cycloïdal 23, la couronne 25 est fixée dans le carter de réducteur 20, par exemple par des vis de fixation, de manière à être bloquée au moins en rotation autour de l'axe principal (ZZ'), et de préférence de manière à être totalement solidaire du carter de réducteur 20 (tous les degrés de liberté entre la couronne 25 et le carter de réducteur 20, en rotation et en translation, étant alors supprimés).

Ainsi, la mise en rotation ω2 de l'arbre d'entrée 2 provoque une mise en rotation du disque 23, autour de son axe central L23 (qui coïncide à chaque instant avec l'axe de l'organe d'excentrique 22), sous l'action combinée du mouvement de l'organe d'excentrique 22, actionné par la rotation de l'arbre d'entrée 2, et de la coopération entre la denture cycloïdale 23T dudit disque 23 et la denture cycloïdale réceptrice 25T conjuguée de la couronne 25, qui provoque et guide un roulement sans glissement (ou quasiment sans glissement) du disque cycloïdal 23 sur la couronne 25.

Le réducteur 1 comprend enfin un arbre de sortie 3, distinct de l'arbre d'entrée 2, et qui est agencé de manière à être entraîné en rotation par le disque cycloïdal 23.

Bien qu'il ne soit pas exclu que l'arbre de sortie 3 soit incliné par rapport à l'arbre d'entrée 2, voire perpendiculaire à celui-ci, et forme ainsi un renvoi d'angle, l'arbre de sortie 3 est de préférence parallèle, et plus particulièrement coaxial, à l'arbre d'entrée 2, tel que cela est visible sur les figures 1 et 2.

L'arbre de sortie 3 sera avantageusement soutenu, et guidé en rotation, par au moins un palier de sortie 26, tel qu'un roulement à billes, logé dans le carter de réducteur 20.

En outre, de préférence, l'arbre d'entrée 2 s'articulera en liaison pivot, voire en liaison rotule, avec l'arbre de sortie 3, au moyen d'un palier de liaison 27, tel qu'un roulement à billes, ici logé dans le moyeu central de l'arbre de sortie 3, et coaxial au palier d'entrée 21, tel que cela est illustré sur la figure 1.

Par ailleurs, tel que cela est bien visible sur la figure 4, l'arbre d'entrée 2 pourra comprendre une ou des masselottes 28 agencées pour compenser le déséquilibre de masse causé par l'organe d'excentrique 22 et par le battement radial du disque cycloïdal 23 qui est induit par la mise en rotation dudit organe d'excentrique 22.

Grâce à ces masselottes 28, on évitera de générer des vibrations ou de provoquer une usure prématurée du réducteur 1, et plus particulièrement des paliers 21, 24, 26, 27.

Pour faciliter le montage du réducteur 1, le carter de réducteur 20 sera de préférence subdivisé, selon un plan de joint P0 transverse à l'axe principal (ZZ'), en au moins une première portion de carter 20A (amont), portant ici le palier d'entrée 21 et l'arbre d'entrée 2, et une seconde portion de carter 20B (aval) portant le palier de sortie 26 et l'arbre de sortie 3.

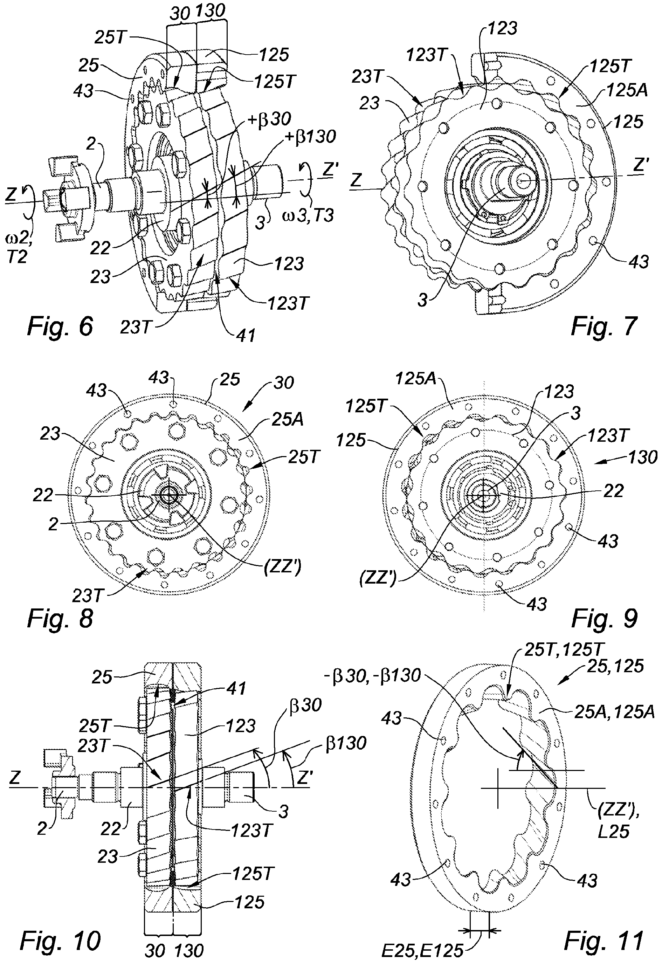

Selon l'invention, et tel que cela est bien visible sur les figures 6 à 11, la denture cycloïdale 23T du disque 23, de même que la denture réceptrice 25T correspondante de la couronne 25, sont hélicoïdales avec des angles d'hélices comme définis dans la revendication 1.

En d'autres termes, les lobes formant les dents 23T, 25T du disque cycloïdal 23 et de la couronne 25 sont générés géométriquement à partir d'une section droite de base (section considérée dans un plan de coupe perpendiculaire à l'axe central L23, L25), qui présente ici un profil de cycloïde, et qui balaye une ligne moyenne génératrice qui s'enroule en hélice autour de l'axe central L23, L25.

Les dents 23T, 25T sont ainsi inclinées, en projection de côté, d'un angle d'hélice $\beta 30$ prédéterminé par rapport à l'axe central L23, L25, tel que cela est bien visible sur les figures 6, 7, 10 et 11.

Avantageusement, l'utilisation d'une denture 23T, 25T hélicoïdale permet un engrènement progressif et très étendu spatialement, qui favorise la douceur du fonctionnement du réducteur 1 et supprime les saccades, chocs, et bruits de fonctionnement.

Selon une possibilité d'agencement correspondant à la variante de réalisation illustrée sur la figure 5, qui n'est pas une réalisation de la présente invention, le réducteur 1 pourrait former un réducteur à un seul étage de réduction cycloïdal 30, comprenant un seul ensemble cycloïdal au sein duquel un disque cycloïdal 23 (éventuellement fractionné en plusieurs disques cycloïdaux empilés axialement les uns contre les autres et fixés les uns aux autres) engrène sur une seule et même couronne 25 (le cas échéant commune à l'empilement de disques 23).

Selon un tel agencement à un seul étage, la transmission de mouvement entre le disque cycloïdal 23 (ou l'empilement de disques cycloïdaux 23) et l'arbre de sortie 3 pourra être obtenue, de façon connue en soi, en prévoyant sur l'arbre de sortie 3 une pluralité de doigts d'accouplement 31 rectilignes, parallèles à l'axe principal (ZZ') et disposés en cercle autour de l'axe principal (ZZ'), à intervalle régulier, lesdits doigts d'accouplement 31 coopérant chacun avec un orifice d'accouplement 32 circulaire creusé dans le disque cycloïdal 23.

Les orifices d'accouplement 32, répartis en cercle et à intervalle régulier autour de l'axe central L23 du disque cycloïdal 23, présentent un diamètre supérieur à celui des doigts d'accouplement 31, de manière à pouvoir absorber la composante de débattement radial du disque 23 par rapport à l'arbre de sortie 3 (c'est-à-dire la composante de mouvement perpendiculaire à l'axe central (ZZ'), qui est induite par la rotation de l'organe d'excentrique 22), tout en transmettant une composante de rotation $\omega 3$.

Bien entendu, on pourrait, à titre de variante, faire porter les doigts d'accouplement 31 par le disque 23, et les orifices d'accouplement 32 par l'arbre de sortie.

Toutefois, selon l'invention et correspondant à la variante de réalisation illustrée sur les figures 1 à 4 et 6 à 10, le réducteur cycloïdal 1 comporte deux étages de réduction 30, 130.

Avantageusement, l'utilisation d'un double étage de réduction permet d'obtenir un rapport de réduction R = $\omega 2/\omega 3$ très élevé, typiquement égal ou supérieur à 40, à 50 voire à 100, tout en conservant une bonne compacité, et notamment un faible encombrement axial le long de l'axe principal (ZZ'), du réducteur 1.

En d'autres termes, la multiplication des étages de réduction cycloïdaux permet d'augmenter la "densité" du réducteur 1, en augmentant considérablement le rapport de réduction tout en conservant un réducteur léger et compact.

Un tel réducteur 1 à double étage comporte tout d'abord un premier étage de réduction 30, qui comprend l'organe d'excentrique 22, un premier disque cycloïdal 23, dit « disque d'entrée », monté en rotation sur ledit organe d'excentrique 22 (lui-même entraîné en rotation par l'arbre d'entrée 2) et qui est pourvu d'une première denture cycloïdale 23T, ainsi qu'une première couronne 25, dite « couronne d'entrée », qui est solidaire du carter de réducteur 20 et qui est pourvue d'une première denture réceptrice 25T cycloïdale sur laquelle engrène la première denture cycloïdale 23T du disque d'entrée 23, tel que cela a été décrit plus haut.

La couronne d'entrée 25 pourra être fixée, par exemple par vissage, dans le carter de réducteur 20, et plus particulièrement dans un lamage 33 de la portion amont 20A de celui-ci, qui facilite notamment le centrage et le maintien radial de ladite couronne d'entrée 25.

Ledit réducteur 1 comporte également un second étage de réduction 130, qui comprend un second disque cycloïdal 123, dit « disque de sortie », qui est solidaire en rotation du disque d'entrée 23, et de préférence formé d'un seul tenant avec ledit disque d'entrée 2, et qui est pourvu d'une seconde denture cycloïdale 123T, ledit second étage de réduction 130 comprenant également une seconde couronne 125, dite « couronne de sortie », qui est distincte de la couronne d'entrée 25 (et distante axialement de ladite couronne d'entrée 25), qui est solidaire en rotation de l'arbre de sortie 3 (de sorte à pouvoir entraîner en rotation ledit arbre de sortie 3, et/ou être entraînée en rotation par ce dernier), et qui est pourvue d'une seconde denture réceptrice 125T cycloïdale sur laquelle engrène la seconde denture cycloïdale 123T du disque de sortie 123.

Par « solidaire en rotation », on indique que le disque de sortie 123 est couplé, et plus préférentiellement fixé (par exemple au moyen de vis de fixation, tel que cela est visible sur la figure 6), au disque d'entrée 23 de telle manière que la rotation du disque d'entrée 23, et plus globalement le mouvement du disque d'entrée 23 (par rapport au carter de réducteur 20), se transmet à l'identique au disque de sortie 123, dans un même mouvement d'ensemble.

On notera que le nombre Z23 de dents (c'est-à-dire le nombre de lobes cycloïdaux) du disque d'entrée 23 pourra être différent du nombre Z123 de dents du disque de sortie 123, et de préférence strictement supérieur à ce dernier, c'est-à-dire que l'on aura : Z23 > Z123.

Par ailleurs, le nombre Z25, Z125 de dents d'une couronne 25, 125 sera supérieur, de préférence d'une unité (d'une dent), au nombre de dents Z23, Z123 du disque 23, 123 correspondant.

On aura ainsi Z25 = Z23 + 1 et Z125 = Z123 + 1.

Au sein du réducteur 1 à double étage de réduction, le rapport de réduction R = ω2/ω3 sera donné par la formule :

$$1 / R = 1 - (Z25 \times Z123) / (Z23 \times Z125).$$

Le nombre de dents des différents disques 23, 123 et couronnes 25, 125 sera avantageusement choisi en fonction du rapport de réduction recherché.

A titre d'exemple, en choisissant Z23 = 25 et Z123 = 18, et par conséquent Z25 = 26 et Z125 = 19, on obtient sensiblement un rapport de réduction R = 67,9.

La couronne de sortie 125, mobile en rotation autour de l'axe principal (ZZ') par rapport au carter de réducteur 20, pourra être rapportée et fixée, par exemple par vissage, à une extrémité de l'arbre de sortie 3, qui pourra former à cet effet une collerette d'appui 34, de préférence épaulée pour faciliter le centrage de ladite couronne 125 de sortie, tel que cela est illustré sur les figures 1 et 3.

Au sein d'un tel réducteur 1 à deux étages de réduction 30, 130, au moins l'un des deux étages, et de préférence chacun des deux étages, utilise une denture cycloïdale hélicoïdale.

Selon l'invention, les dentures cycloïdales 23T, 25T, 123T, 125T du disque d'entrée 23 et de la couronne d'entrée 25 d'une part, du disque de sortie 123 et de la couronne de sortie 125 d'autre part, sont hélicoïdales, et présentent à ce titre respectivement un angle d'hélice dit « angle d'hélice d'entrée » β30 et un angle d'hélice dit « angle d'hélice de sortie » β130, tel que cela est bien visible sur les figures 6 et 10.

Lesdits angles d'hélice β30, β130 caractérisent l'inclinaison des dents par rapport à l'axe central L23, L25 de leur disque 23, 123 ou de leur couronne 25, 125 respectif, et plus globalement par rapport à l'axe principal (ZZ') auquel lesdits axes centraux sont de préférence parallèles.

Avantageusement, l'ensemble des étages de réduction cycloïdaux 30, 130 du réducteur 1 présente ainsi un fonctionnement doux et silencieux.

Selon l'invention, et tel que cela est bien visible sur les figures 6 et 10, l'angle d'hélice d'entrée β30 et l'angle d'hélice de sortie β130 sont orientés dans le même sens par rapport à l'axe principal (ZZ'), de telle sorte que le premier étage de réduction 30 et le second étage de réduction 130 sont agencés selon une disposition à dentures 23T, 25T, respectivement 123T, 125T sensiblement parallèles.

Plus particulièrement, l'angle d'hélice du disque d'entrée 23 (par convention + β30) est de même signe que l'angle d'hélice du disque de sortie 123 (par convention + β130), c'est-à-dire est incliné dans le même sens par rapport à l'axe principal (ZZ'), voire sensiblement parallèle à (et donc à la fois de même signe et de même valeur que) l'angle d'hélice du disque de sortie 123, tandis que, respectivement, l'angle d'hélice de la couronne d'entrée 25 (par convention -β30 car il est de même valeur que l'angle d'hélice du disque d'entrée 23, mais de signe opposé par nécessité de construction) est de même signe que l'angle d'hélice de la couronne de sortie 125 (par convention -β130), voire sensiblement parallèle audit angle d'hélice de la couronne de sortie 125.

Avantageusement, à l'inverse d'un agencement en chevrons, un agencement (sensiblement) parallèle des dentures, c'est-à-dire un agencement selon lequel l'angle d'hélice β30 du premier étage 30 et l'angle d'hélice β130 du second étage 130 sont de même signe, c'est-à-dire ont le même sens d'inclinaison par rapport à l'axe principal (ZZ'), permet de faire supporter par le réducteur 1 lui-même les efforts axiaux qui sont produits par l'inclinaison des dentures hélicoïdales.

Ainsi, on peut limiter, voire sensiblement annuler, la résultante d'effort axiale qui est générée selon l'axe principal (ZZ') en raison de l'utilisation des dentures hélicoïdales, ce qui évite d'avoir à faire supporter une telle composante d'effort axiale par des paliers (roulements) extérieurs au réducteur 1.

Le réducteur 1 peut ainsi avantageusement être implanté au sein du système de direction assistée 4 sans qu'il soit nécessaire de modifier ou de renforcer par ailleurs le mécanisme de direction 6.

Dans l'absolu, il est possible d'avoir des angles d'hélice rigoureusement parallèles entre le premier étage 30 et le second étage 30, c'est-à-dire que l'on a : β30 = β130 (donc + β30 = + β130 et -β30 = -β130).

Toutefois, selon une possibilité préférentielle d'agencement, la valeur (amplitude) de l'angle d'hélice d'entrée β30 est différente de la valeur (amplitude) de l'angle d'hélice de sortie β130.

Plus particulièrement, ces deux valeurs d'angle d'hélice β30, β130 sont de préférence ajustées de manière à obtenir, notamment au regard du nombre de dents $Z_{23}$, $Z_{123}$ et du module respectif $m_{23}$, $m_{123}$ de chaque disque cycloïdal 23, 123, une compensation optimisée des efforts axiaux.

En effet, pour un engrenage hélicoïdal d'angle d'hélice β, de rayon primitif r (avec r = 1/2 * m * Z, où m est le module et Z le nombre de dents), la composante d'effort axiale $F_a$ générée vaut : $F_a = T * \sin(\beta) / r = 2*T*\sin(\beta)/(m*Z)$, où T représente le couple transmis.

En appliquant cette formule à chaque étage de réduction 30, 130, on peut exprimer une relation entre l'angle d'hélice d'entrée β30 et l'angle d'hélice de sortie β130 qui permet à chaque étage 30, 130 de neutraliser l'effort axial généré par l'autre étage 130, 30.

Plus particulièrement, on pourra calculer l'angle d'hélice de sortie β130 comme suit :

$$\sin \beta130 = \sin \beta30 * (m_{123} * Z_{123}) / (m_{23} * Z_{23})$$

A titre d'exemple, un disque de sortie 123 présentant un angle d'hélice β130 = 25,33 deg, un module $m_{123}$ = 4,5 mm et un nombre de dents $Z_{123}$ = 18, pourra compenser les efforts axiaux générés par un disque d'entrée 23 possédant un angle d'hélice β30 de 25,00 deg, un module $m_{23}$ = 3,2 mm et un nombre de dents $Z_{23}$ = 25.

Par ailleurs, la majorité des dents (lobes cycloïdaux), et de préférence la totalité des dents, qui constituent la denture réceptrice 25T, 125T de la ou des couronnes 25, 125 sont de préférence formées d'un seul tenant avec leur couronne 25, 125 respective.

Un tel agencement monolithique des dentures 25T, 125T permettra, par comparaison avec les anciennes dentures réalisées par un ensemble de pions individuels, d'augmenter la robustesse des couronnes 25, 125 et, surtout, d'améliorer la précision du façonnage (hélicoïdal) des dents et la précision du positionnement desdites dents les unes par rapport aux autres, ce qui améliorera la qualité de l'engrènement tout en permettant de réduire significativement le temps de fabrication nécessaire pour assembler le réducteur 1.

Le façonnage des dentures 25T, 125T, et plus globalement des couronnes (sous formes d'anneaux fermés, qui entourent l'axe central L25 de la couronne, et donc l'axe principal (ZZ'), en continu sur 360 degrés), pourra être réalisé par exemple par moulage et/ou par taillage.

Le matériau utilisé pour fabriquer les couronnes 25, 125, et leurs dentures respectives 25T, 125T, pourra être un acier, éventuellement traité (par exemple par traitement thermique) pour augmenter sa dureté de surface et/ou réduire son coefficient de frottement par rapport au disque cycloïdal 23, 123.

On notera qu'il en ira de préférence de même pour chaque disque cycloïdal 23, 123, dont la majorité et de préférence la totalité des dents formant la denture 23T, 123T sera préférentiellement formée d'un seul tenant, par exemple par moulage et/ou par taillage, avec le disque 23, 123 concerné.

Par ailleurs, le disque d'entrée 23 et le disque de sortie 123 seront de préférence réunis solidairement l'un à l'autre pour former un sous-ensemble de disque 40, animé d'un même mouvement d'ensemble (par rapport au carter de réducteur 20).

Selon une possibilité de réalisation, le disque d'entrée 23 et le disque de sortie 123 pourront être fabriqués sous formes de pièces séparées, puis être assemblés l'un à l'autre pour former ledit sous-ensemble, par exemple par des vis de fixation, tel que cela est illustré sur les figures 6 et 7.

Toutefois, selon une possibilité préférentielle de réalisation, le disque d'entrée 23 et le disque de sortie 123, avec leur dentures 23T, 123T respectives, pourront être formés d'un seul tenant l'un avec l'autre, de sorte à constituer un sous-ensemble 40 unique, monolithique, dont chaque disque 23, 123 forme de préférence une extrémité axiale, tel que cela est illustré sur la figure 1.

De préférence, on prévoira une gorge 41 qui séparera axialement, de façon partielle, le disque d'entrée 23 du disque de sortie 123, au moins sur une plage de rayons (par rapport à l'axe central L23 commun aux deux disques) qui couvre le secteur annulaire qui correspond à la hauteur des dentures 23T, 123T, tel que cela est bien visible sur les figures 1 et 4.

Ladite gorge 41 matérialise la séparation axiale entre les deux étages de réduction 30, 130 et permet avantageusement d'éviter que le disque d'entrée 23 n'interfère ou n'engrène avec la couronne de sortie 125, et, inversement, que le disque de sortie 123 n'interfère ou n'engrène avec la couronne d'entrée 25.

En outre, une telle gorge 41 peut former un dégagement d'outil facilitant le taillage ou la rectification des dentures 23T, 123T des disques 23, 123.

Le sous-ensemble 40 de disques comprendra en outre de préférence un logement central tubulaire 42 conçu pour accueillir, selon un montage ajusté, l'organe d'excentrique 22 et le palier d'excentrique 24.

Le ou les disques 23, 123, et donc plus globalement le sous-ensemble 40, pourront être par exemple formés en acier, qui pourra éventuellement être traité (par exemple par traitement thermique) pour augmenter sa dureté de surface et/ou réduire son coefficient de frottement.

Un exemple non revendiqué concerne également en tant que telles les "pièces détachées" cycloïdales à denture hélicoïdale permettant de réaliser l'un et/ou l'autre des étages de réduction 30, 130.

Ainsi, un tel exemple non revendiqué concerne également un disque cycloïdal 23, 123 pour réducteur à engrenage cycloïdal 1, selon l'une quelconque des variantes de l'invention, ledit disque cycloïdal 23, 123 comprenant sur sa périphérie, de préférence d'un seul tenant (et sur tout le pourtour dudit disque, à 360 degrés autour de son axe central L23), une denture cycloïdale hélicoïdale 23T, 123T.

Un tel exemple non revendiqué concerne plus particulièrement un sous-ensemble 40 de disque cycloïdal, de préférence monobloc, à deux étages 30, 130 comprenant, de préférence d'un seul tenant, un premier disque cycloïdal 23, présentant une première denture cycloïdale hélicoïdale 23T, et un second disque cycloïdal 123, présentant une seconde denture cycloïdale hélicoïdale 123T, empilés axialement, lesdits premier et second disques 23 étant de préférence séparés partiellement l'un de l'autre par une gorge 41, et leurs dentures ayant de préférence des angles d'hélice $\beta 30$, $\beta 130$ de même signe, voire parallèles.

De même, un autre exemple non revendiqué porte également sur une couronne cycloïdale 25, 125 pour réducteur à engrenage cycloïdal 1, selon l'une quelconque des variantes de l'invention, ladite couronne 25, 125 comprenant une jante annulaire 25A, 125A sur la périphérie interne de laquelle est formée, de préférence d'un seul tenant, une denture cycloïdale hélicoïdale 25T, 125T, tel que cela est illustré notamment sur la figure 11.

Dans un tel exemple non revendiqué, ladite couronne 25, 125 est formée dans une "tranche" de matériau d'épaisseur (axiale) E25, E125 constante, dont les faces extrémales sont sensiblement normales à l'axe central L25.

Dans un tel exemple non revendiqué, ladite couronne 25, 125, et plus particulièrement sa jante annulaire 25A, 125A, est percée de trous de fixation 43 permettant une fixation, par exemple par vissage, de la couronne (d'entrée) 25 sur le carter de réducteur 20, respectivement de la couronne (de sortie) 125 sur l'arbre de sortie 3.

## Revendications

1. Réducteur (1) à engrenage cycloïdal comprenant un arbre d'entrée (2), monté en rotation dans un carter de réducteur (20) selon un axe dit « axe principal » (ZZ'), un organe d'excentrique (22) porté par l'arbre d'entrée (2) et entraîné en rotation par ce dernier, au moins un disque cycloïdal (23) qui est monté en rotation sur ledit organe d'excentrique (22) et qui est pourvu d'une denture cycloïdale (23T), au moins une couronne (25) pourvue d'une denture réceptrice (25T) sur laquelle engrène la denture cycloïdale (23T) du disque cycloïdal, et un arbre de sortie (3), distinct de l'arbre d'entrée (2), qui est agencé de manière à être entraîné en rotation par le disque cycloïdal (23),

   ledit réducteur comporte deux étages de réduction (30, 130), dont un premier étage de réduction (30), qui comprend l'organe d'excentrique (22), un premier disque cycloïdal (23), dit « disque d'entrée », qui est monté en rotation sur ledit organe d'excentrique et qui est pourvu d'une première denture cycloïdale (23T), ainsi qu'une première couronne (25), dite « couronne d'entrée », qui est solidaire du carter de réducteur (20) et qui est pourvue d'une première denture réceptrice (25T) cycloïdale sur laquelle engrène la première denture (23T) cycloïdale du disque d'entrée (23), et un second étage de réduction (130), qui comprend un second disque cycloïdal (123), dit « disque de sortie », qui est solidaire en rotation du disque d'entrée (23), et de préférence formé d'un seul tenant avec ledit disque d'entrée, et qui est pourvu d'une seconde denture cycloïdale (123T), ledit second étage de réduction comprenant également une seconde couronne (125), dite « couronne de sortie », qui est distincte de la couronne d'entrée (25), qui est solidaire en rotation de l'arbre de sortie (3), et qui est pourvue d'une seconde denture réceptrice (125T) cycloïdale sur laquelle engrène la seconde denture (123T) cycloïdale du disque de sortie, ledit réducteur étant **caractérisé en ce que** les dentures cycloïdales (23T, 25T, 123T, 125T) du disque d'entrée (23) et de la couronne d'entrée (25) d'une part, du disque de sortie (123) et de la couronne de sortie (125) d'autre part, sont hélicoïdales, et présentent à ce titre respectivement un angle d'hélice d'entrée (β30) et un angle d'hélice de sortie (β130),

et **en ce que**

l'angle d'hélice d'entrée (β30) et l'angle d'hélice de sortie (β130) sont orientés dans le même sens par rapport à l'axe principal (ZZ'), de telle sorte que le premier et le second étage de réduction (30, 130) sont agencés selon une disposition à dentures (23T, 25T, 123T, 125T) sensiblement parallèles.

2.  Réducteur selon la revendication 1 **caractérisé en ce que** la valeur de l'angle d'hélice d'entrée (β30) est différente de la valeur de l'angle d'hélice de sortie (β130).

3.  Réducteur selon la revendication 2 **caractérisé en ce que** l'angle d'hélice de sortie (β130) est calculé par la formule :

$$\sin \beta130 = \sin \beta30 * (m123 * Z123) / (m23 * Z23)$$

où

m23 désigne le module du disque d'entrée,
m123 désigne le module du disque de sortie
Z23 désigne le nombre de dents du disque d'entrée (23)
Z123 désigne le nombre de dents du disque de sortie (123).

4.  Réducteur selon l'une quelconque des revendications précédentes **caractérisé en ce que** la majorité des dents, et de préférence la totalité des dents, qui constituent la denture réceptrice (25T, 125T) de la ou des couronnes (25, 125) sont formées d'un seul tenant avec leur couronne respective.

5.  Système de direction assistée (4) comprenant un moteur d'assistance (5), un mécanisme de direction (6) permettant de modifier l'angle de braquage d'un ou plusieurs organes directionnels (7, 8), tels qu'une ou plusieurs roues directrices, ledit système de direction assistée (4) étant **caractérisé en ce qu'**il comporte un réducteur cycloïdal (1) selon l'une des revendications 1 à 4 pour assurer une transmission mécanique entre le moteur d'assistance (5) et le mécanisme de direction (6).


**Patentansprüche**

1.  Zykloidengetriebe (1), umfassend eine Eingangswelle (2), die drehend in einem Getriebegehäuse (20) gemäß einer so genannten "Hauptachse" (ZZ') montiert ist, ein Exzenterelement (22), das von der Eingangswelle (2) getragen und von dieser in Drehung versetzt wird, wenigstens eine Zykloidenscheibe (23), die drehend auf dem Exzenterelement (22) montiert ist und die mit einer Zykloidenverzahnung (23T) versehen ist, wenigstens einen Kranz (25), der mit einer Aufnahmeverzahnung (25T) versehen ist, auf welcher die Zykloidenverzahnung (23T) der Zykloidenscheibe eingreift, und eine Ausgangswelle (3), die von der Eingangswelle (2) verschieden ist und die so angeordnet ist, dass sie von der Zykloidenscheibe (23) in Drehung versetzt wird,

    wobei das Getriebe zwei Untersetzungsstufen (30, 130) umfasst, davon eine erste Untersetzungsstufe (30), die das Exzenterelement (22), eine erste Zykloidenscheibe (23), so genannte "Eingangsscheibe", die auf dem Exzenterelement drehend montiert ist und die mit einer ersten Zykloidenverzahnung (23T) versehen ist, sowie einen ersten Kranz (25), so genannten "Eingangskranz", umfasst, der mit dem Getriebegehäuse (20) fest verbunden ist und der mit einer ersten Zykloidenaufnahmeverzahnung (25T) versehen ist, auf welcher die erste Zykloidenverzahnung (23T) der Eingangsscheibe (23) eingreift, und eine zweite Untersetzungsstufe (130), die eine zweite Zykloidenscheibe (123), so genannte "Ausgangsscheibe", umfasst, die mit der Eingangsscheibe (23) drehfest verbunden ist und die vorzugsweise einstückig mit der Eingangsscheibe ausgebildet ist, und die mit einer zweiten Zykloidenverzahnung (123T) versehen ist, wobei die zweite Untersetzungsstufe ebenfalls einen zweiten Kranz (125), so genannten "Ausgangskranz", umfasst, der von dem Eingangskranz (25) verschieden ist, der mit der Ausgangswelle (3) drehfest verbunden ist und der mit einer zweiten Zykloidenaufnahmeverzahnung (125T) versehen ist, auf welcher die zweite Zykloidenverzahnung (123T) der Ausgangsscheibe eingreift,

wobei das Getriebe **dadurch gekennzeichnet ist, dass** die Zykloidenverzahnungen (23T, 25T, 123T, 125T) der Eingangsscheibe (23) und des Eingangskranzes (25) einerseits, der Ausgangsscheibe (123) und des Ausgangskranzes (125) andererseits schrägverzahnt sind und als solche jeweils einen Eingangssteigungswinkel ($\beta$30) und einen Ausgangssteigungswinkel ($\beta$130) aufweisen,

und dadurch, dass der Eingangssteigungswinkel ($\beta$30) und der Ausgangssteigungswinkel ($\beta$130) in der gleichen Richtung in Bezug auf die Hauptachse (ZZ') ausgerichtet sind, sodass die erste und die zweite Untersetzungsstufe (30, 130) gemäß einer Anordnung mit im Wesentlichen parallelen Verzahnungen (23T, 25T, 123T, 125T) angeordnet sind.

2. Getriebe nach Anspruch 1, **dadurch gekennzeichnet, dass** sich der Wert des Eingangssteigungswinkels ($\beta$30) von dem Wert des Ausgangssteigungswinkels ($\beta$130) unterscheidet.

3. Getriebe nach Anspruch 2, **dadurch gekennzeichnet, dass** der Ausgangssteigungswinkel ($\beta$130) durch folgende Formel berechnet wird:

$$\sin \beta130 = \sin \beta30 * (m123 * Z123) / (m23 * Z23)$$

wobei

m23 den Modul der Eingangsscheibe bezeichnet,
m123 den Modul der Ausgangsscheibe bezeichnet,
Z23 die Anzahl von Zähnen der Eingangsscheibe (23) bezeichnet,
Z123 die Anzahl von Zähnen der Ausgangsscheibe (123) bezeichnet.

4. Getriebe nach einem der vorstehenden Ansprüche, **dadurch gekennzeichnet, dass** der Großteil der Zähne, und vorzugsweise die Gesamtheit der Zähne, welche die Aufnahmeverzahnung (25T, 125T) des Kranzes bzw. der Kränze (25, 125) bilden, einstückig mit ihrem jeweiligen Kranz ausgebildet sind.

5. Servolenkungssystem (4), umfassend einen Servomotor (5), einen Lenkungsmechanismus (6), der es ermöglicht, den Lenkwinkel eines oder mehrerer Lenkelemente (7, 8), wie etwa eines oder mehrerer Antriebsräder, zu ändern, wobei das Servolenkungssystem (4) **dadurch gekennzeichnet ist, dass** es ein Zykloidengetriebe (1) nach einem der Ansprüche 1 bis 4 umfasst, um eine mechanische Übertragung zwischen dem Servomotor (5) und dem Lenkungsmechanismus (6) sicherzustellen.

## Claims

1. A cycloidal gear reducer (1) comprising an input shaft (2) rotatably mounted in a reducer casing (20) along an axis called «main axis» (ZZ'), an eccentric member (22) carried by the input shaft (2) and rotatably driven by the latter, at least one cycloidal disc (23) rotatably mounted on said eccentric member (22) and provided with a cycloidal toothing (23T), at least one crown (25) provided with a receiving toothing (25T) with which the cycloidal toothing (23T) of the cycloidal disc meshes, and an output shaft (3), distinct from the input shaft (2) arranged to be rotatably driven by the cycloidal disc (23), the cycloidal gear reducer including two reduction stages (30, 130), including a first reduction stage (30) which comprises the eccentric member (22), a first cycloidal disc (23), called «input disc», which is rotatably mounted on said eccentric member and which is provided with a first cycloidal toothing (23T), as well as a first crown (25), called «input crown» which is secured to the reducer casing (20) and which is provided with a first cycloidal receiving toothing (25T) with which the first cycloidal toothing (23T) of the input disc (23) meshes, and a second reduction stage (130) which comprises a second cycloidal disc (123), called «output disc», which is rotatably secured to the input disc (23), and preferably formed integrally with said input disc, and which is provided with a second cycloidal toothing (123T), said second reduction stage also comprising a second crown (125), called «output crown», which is distinct from the input crown (25), which is rotatably secured to the output shaft (3), and which is provided with a second cycloidal receiving toothing (125T) with which the second cycloidal toothing (123T) of the output disc meshes, the cycloidal gear reducer (1) being **characterized in that** the cycloidal toothings (23T, 25T, 123T, 125T), on the one hand, of the input disc (23) and of the input crown (25) and, on the other hand, of the output disc (123) and of the output crown (125), are helical and have, as such, respectively an input helix angle ($\beta$30) and an output helix angle ($\beta$130) and **in that** the input helix angle ($\beta$30) and the output helix angle ($\beta$130) are

oriented in the same direction relative to the main axis (ZZ'), so that the first and the second reduction stages (30, 130) are arranged in an arrangement with substantially parallel toothings (23T, 25T, 123T, 125T).

2. The cycloidal gear reducer according to claim 1 **characterized in that** the value of the input helix angle (β30) is different from the value of the output helix angle (β130).

3. The cycloidal gear reducer according to claim 2 **characterized in that** the output helix angle value (β130) is calculated by the formula:

$$\sin β130 = \sin β30 * (m123 * Z123) / (m23 * Z23)$$

where

    m23 designates the input disc module
    m123 designates the output disc module
    Z23 designates the number of teeth of the input disc 23
    2123 designates the number of teeth of the output disc 123.

4. The cycloidal gear reducer according to any one of the preceding claims **characterized in that** the majority of teeth, and preferably the totality of teeth, that constitute the receiving toothing (25T, 125T) of the crown(s) (25, 125) are formed integrally with their respective crown.

5. A power steering system (4) comprising an assist motor (5), a steering mechanism (6) allowing to modify the steering angle of one or more steering member(s) (7, 8), such as one or more steered wheel(s), said power steering system (4) being **characterized in that** it includes a cycloidal gear reducer (1) according to any of claims 1 to 4 to ensure a mechanical transmission between the assist motor (5) and the steering mechanism (6).

*Fig. 1*

*Fig. 2*

Fig. 3

Fig. 4

Fig. 5

Fig. 6

Fig. 7

Fig. 8

Fig. 9

Fig. 10

Fig. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0931714 A
- EP 0286760 A1
- CN 104633062 A
- EP 2960546 A1